# EUROPÄISCHE PATENTSCHRIFT

(11) **EP 4 107 480 B1**
(45) Veröffentlichungstag und Bekanntmachung des Hinweises auf die Patenterteilung: **13.11.2024**
(21) Anmeldenummer: 21705183.8
(22) Anmeldetag: 12.02.2021
(51) Int. Cl.: G02B 26/08, G02B 26/10, G01B 9/02055, G01B 11/24

(54) **MESSVORRICHTUNG ZUR INTERFEROMETRISCHEN FORMVERMESSUNG**
MEASURING DEVICE FOR INTERFEROMETRIC SHAPE MEASUREMENT
DISPOSITIF DE MESURE DE FORME INTERFÉROMÉTRIQUE

(30) Priorität: 17.02.2020 DE 102020201958
(43) Veröffentlichungstag der Anmeldung: 28.12.2022
(73) Patentinhaber: Carl Zeiss SMT GmbH, 73447 Oberkochen (DE)
(72) Erfinder: HETZLER, Jochen, 73434 Aalen (DE)
(74) Vertreter: Zeuner Summerer Stütz
(86) Internationale Anmeldenummer: PCT/EP2021/053528
(87) Internationale Veröffentlichungsnummer: WO 2021/165159

(56) Entgegenhaltungen:
- WO-A1-2020/009150
- WO-A1-2020/193277
- RU-C1- 2 667 335
- US-B2- 8 687 203

## Beschreibung

Die vorliegende Anmeldung beansprucht die Priorität der deutschen Patentanmeldung 10 2020 201 958.4 vom 17. Februar 2020.

### Hintergrund der Erfindung

Die Erfindung betrifft eine Messvorrichtung sowie ein Verfahren zur interferometrischen Formvermessung einer Oberfläche eines Testobjekts. Als Testobjekt kann beispielsweise ein optisches Element für die Mikrolithographie dienen. Durch das Bedürfnis nach immer kleineren Strukturen werden in der Mikrolithographie immer höhere Anforderungen an die optischen Eigenschaften von eingesetzten optischen Elementen gestellt. Die optische Oberflächenform dieser optischen Elemente muss daher mit möglichst hoher Genauigkeit bestimmt werden.

Zur hochgenauen interferometrischen Vermessung optischer Oberflächen bis in den Subnanometerbereich sind interferometrische Messvorrichtungen und Verfahren bekannt, bei denen ein diffraktives optisches Element aus einer Eingangswelle eine Prüfwelle und eine Referenzwelle erzeugt. Die Wellenfront der Prüfwelle kann durch das diffraktive optische Element derart an eine Solloberfläche des Testobjekts angepasst werden, dass diese an jedem Ort im Wesentlichen senkrecht auf die Sollform auftrifft und von dieser in sich zurückreflektiert wird. Mit Hilfe eines durch Überlagerung der reflektierten Prüfwelle mit der Referenzwelle gebildeten Interferogramms lassen sich dann Abweichungen von der Sollform bestimmen.

In US 7,061,626 B2 wird eine derartige interferometrische Messvorrichtung mit einem Fizeauelement als Referenzelement zur Erzeugung der Referenzwelle und einem computergenerierten Hologramm (CGH) zur zumindest teilweisen Anpassung einer Wellenfront einer Prüfwelle an die zu vermessenden Oberfläche beschrieben. Weiterhin wird in US2018/0106591A1 eine alternative Ausführungsform der eingangs genannten Messvorrichtung beschrieben, bei dem ein komplex kodiertes computergeneriertes Hologramm (CGH) als diffraktives optisches Element Verwendung findet. Das CGH erzeugt aus einer Eingangswelle sowohl eine auf die zu vermessende Oberfläche gerichtete Prüfwelle als auch eine in einem eigenen Referenzarm verlaufende ebene Referenzwelle. Die Referenzwelle wird von einem reflektiven optischen Referenzelement zum CGH zurückreflektiert.

Sollen mit der Messvorrichtung Testobjekte mit unterschiedlichen Sollformen vermessen werden, kommen typsicherweise unterschiedliche CGH's zum Einsatz. Damit wird zur Vermessung eines neuen, anders gearteten Testobjekts das bisherige, zur Vermessung eines ersten Testobjekts verwendete CGH durch ein an die Sollform des neuen Testobjekts angepasstes CGH ersetzt. Bleibt der Einstrahlwinkel auf das CGH gleich, so erfordert das neue CGH oft eine Veränderung der Position von Testobjekt und ggf. des Referenzelements. Daraus ergibt sich ein hoher Platzbedarf innerhalb des Interferometers, d.h. eine kompakte Ausführung des Interferometers wird dadurch sehr erschwert.

In US 7,061,626 B1 wird dieses Problem gelöst, indem die CGH's derart konfiguriert werden, dass die Position des Testobjekts im Wesentlichen gleich bleibt. Diese Konfiguration der CGH's hat jedoch zur Folge, dass die CGH's mit unterschiedlichen Einfallswinkeln angestrahlt werden müssen. Zur Erzeugung der unterschiedlichen Einfallswinkel kommen im genannten Stand der Technik unterschiedlich konfigurierte Prismen zum Einsatz. Dabei wird jeweils ein zur Erzeugung des benötigten Einfallwinkels konfiguriertes Prisma im Strahlengang vor dem entsprechenden CGH angeordnet.

Die Verwendung unterschiedlich konfigurierter Prismen zur Erzeugung der unterschiedlichen Einfallswinkel führt jedoch zu einem erheblichen Umbauaufwand an der Messvorrichtung und macht daher die Bedienung der Messvorrichtung unflexibel. Weiterhin diese Vorgehensweise einen erheblichen Kostenaufwand, da die an die entsprechenden CGH's angepassten Prismen eigens gefertigt werden müssen. Eine Messvorrichtung, in der der Einstrahlwinkel mittels einer Kippbewegung eines Spiegels verändert wird, ist aus US 8 687 203 B2 bekannt,

### Zugrunde liegende Aufgabe

Es ist eine Aufgabe der Erfindung, eine Messvorrichtung sowie ein Messverfahren bereitzustellen, womit die vorgenannten Probleme gelöst werden. Insbesondere ist es Aufgabe der Erfindung eine Messvorrichtung sowie ein Messverfahren bereitzustellen, womit Testobjekte unterschiedlicher Oberflächenformen ohne großen Umbauaufwand vermessen werden können.

### Erfindungsgemäße Lösung

Die vorgenannte Aufgabe kann erfindungsgemäß beispielsweise gelöst werden mit einer Messvorrichtung zur interferometrischen Formvermessung einer Oberfläche eines Testobjekts mit einem diffraktiven optischen Element zum Erzeugen einer zum Einstrahlen auf die Oberfläche des Testobjekts konfigurierten Prüfwelle aus einer eingestrahlten Messstrahlung, einem Referenzelement zur Erzeugung einer Referenzwelle, einem dem diffraktiven optischen Element im Strahlengang der Messstrahlung vorgelagerten Umlenkelement, sowie einer Halteeinrichtung zum Halten des Umlenkelements, welches dazu konfiguriert ist, eine Stellung des Umlenkelements durch eine Kombination aus einer Kippbewegung und einer Translationsbewegung zu verändern.

Eine derartige Kombination aus einer Kippbewegung und einer Translationsbewegung kann durch eine Verkippung des Umlenkelements, insbesondere eine Rotation um eine innerhalb des Umlenkelements bzw. im Wesentlichen durch den Schwerpunkt des Umlenkelements verlaufende Kippachse und eine von der Verkippung unabhängige Verschiebung des Umlenkelements erfolgen. Alternativ kann die Kombination aus einer Kippbewegung und einer Translationsbewegung durch eine Rotation um eine erheblich vom Schwerpunkt des Umlenkelements beabstandete Rotationsachse erfolgen. Unter einem Umlenkelement wird ein Modul zur Änderung der Ausbreitungsrichtung der Messstrahlung, insbesondere um einen Winkel von mindestens 20°, mindestens 40° oder mindestens 80°, verstanden.

Durch das erfindungsgemäße Vorsehen eines in den genannten unterschiedlichen Stellungen positionierbaren Umlenkelements können Testobjekte unterschiedlicher Oberflächenformen ohne große Umkonfigurierung der Messvorrichtung und damit ohne großen Umbauaufwand vermessen werden. Durch die Stellungsverstellbarkeit des Umlenkelements kann die Position für das Testobjekt im Wesentlichen gleich bleiben sowie ggf. eine Repositionierung des Referenzelements vermieden werden. Damit kann die Messvorrichtung kompakt gestaltet werden. Gleichzeitig ist es nicht notwendig für das jeweilige Testobjekt ein eigens angepasstes Strahlorientierungselement, wie etwa ein speziell dafür vorgesehenes Prisma, einzubauen, wodurch die Vermessung unterschiedlicher Oberflächenformen mit vergleichbar geringem Aufwand möglich ist.

Gemäß einer Ausführungsform ist die Halteeinrichtung dazu konfiguriert, mittels der Translationsbewegung eine Position des Umlenkelements um mindestens 2 mm, insbesondere um mindestens 10 mm, zu verschieben.

Gemäß einer Ausführungsform ist die Halteeinrichtung dazu konfiguriert, mittels der Kippbewegung eine Kippstellung des Umlenkelements um mindestens 2 mrad, insbesondere um mindestens 10 mrad zu verändern. Handelt es sich bei der zuvor genannten Kombination aus Kipp- und Translationsbewegung um eine Rotation um eine erheblich vom Schwerpunkt des Umlenkelements beabstandete Rotationsachse, so erfährt das Umlenkelement bei der Ausführung der Rotationsbewegung gleichzeitig eine Änderung seiner Orientierung und seiner Ortsposition, d.h. die vorstehend genannte Veränderung der Position des Umlenkelements kann bereits durch die Ausführung dieser Rotationsbewegung bewirkt werden, ggf. kann aber zusätzlich eine Translationsbewegung erfolgen.

Die Kombination aus Veränderung der Orientierung und Veränderung der Ortsposition des Umlenkelements ermöglicht es, den Einfallwinkel auf das diffraktive optische Element zu variieren ohne dabei die Ortsposition des diffraktiven optischen Elements zu verändern.

Gemäß einer weiteren Ausführungsform ist die Halteeinrichtung dazu konfiguriert, die Stellung des Umlenkelements derart zu verändern, dass ein mittlerer Auftreffpunkt der Messstrahlung auf dem Umlenkelement um mindestens 2 mm, insbesondere um mindestens 10 mm, verschoben wird.

Gemäß einer weiteren Ausführungsform umfasst die Halteeinrichtung einen Kippaktuator zur Ausführung der Kippbewegung und einen separaten Verschiebeaktuator zur Ausführung der Translationsbewegung.

Gemäß einer weiteren Ausführungsform weist die Halteeinrichtung eine gebogene Führungsschiene auf. Insbesondere ist die Führungsschiene kreisabschnittsförmig gestaltet. Gemäß einer Ausführungsvariante ist das Umlenkelement an einem Führungsteil zur Hin- und Herbewegung innerhalb der Führungsschiene befestigt.

Gemäß einer weiteren Ausführungsform erfolgt die Kombination aus der Kippbewegung und der Translationsbewegung durch eine Rotationsbewegung bezüglich einer Rotationsachse, wobei die Rotationsachse von einem geometrischen Schwerpunkt des Umlenkelements um mindestens 2 mm, insbesondere um mindestens 5 mm, beabstandet ist. Insbesondere ist die Rotationsachse außerhalb des Umlenkelements angeordnet.

Gemäß einer weiteren Ausführungsform erfolgt die Kombination aus der Kippbewegung und er Translationsbewegung durch eine Rotationsbewegung bezüglich einer Rotationsachse, wobei die Rotationsachse von einem mittleren Auftreffpunkt der Messstrahlung auf dem Umlenkelement um mindestens 2 mm, insbesondere um mindestens 5 mm, beabstandet ist. Gemäß einer weiteren Ausführungsform ist die Rotationsachse mindestens 2 mm, insbesondere mindestens 5 mm von einem geometrischen Schwerpunkt des Umlenkelements beabstandet.

Gemäß einer weiteren Ausführungsform ist die Rotationsachse derart angeordnet, dass der Schnittpunkt der Rotationsachse mit einer Strahlebene, welche vom Richtungsvektor der auf das Umlenkelement eingestrahlten Messstrahlung und dem Richtungsvektor der vom Umlenkelement abgestrahlten Messstrahlung aufgespannt ist, in der Strahlebene auf der gleichen Seite bezüglich einer durch den Richtungsvektor der eingestrahlten Messstrahlung definierten Einstrahlachse wie das diffraktive optische Element angeordnet ist. Mit anderen Worten ist sowohl das diffraktive optische Element als auch der Schnittpunkt in einem "oberen Halbraum" bezüglich einer durch die eingestrahlte Messstrahlung definierten Einstrahlachse angeordnet.

Gemäß einer weiteren Ausführungsform ist die Rotationsachse derart angeordnet, dass der Schnittpunkt der Rotationsachse mit der Strahlebene in einem Bereich angeordnet ist, welcher in Bezug auf das diffraktive optische Element auf der der Einstrahlachse entgegengesetzten Seite liegt, wobei der Bereich in Richtung der Einstrahlachse eine Ausdehnung von maximal dem Zweifachen eines Abstands des diffraktiven optischen Element von der Einstrahlachse und in Richtung senkrecht zur Einstrahlachse eine Ausdehnung von maximal dem Dreifachen des Abstands aufweist. Gemäß einer weiteren Ausführungsform weist der Bereich sowohl in Richtung der Einstrahlachse als auch quer zur Einstrahlachse jeweils eine Ausdehnung von maximal dem Einfachen des Abstands auf.

Gemäß einer weiteren Ausführungsform umfasst die Halteeinrichtung mindestens einen Aktuator zur Ausführung der zumindest einen Rotationsbewegung. Insbesondere umfasst die Halteeinrichtung einen weiteren Aktuator zur Ausführung einer Translationsbewegung.

Gemäß einer weiteren Ausführungsform umfasst das Umlenkelement einen Umlenkspiegel. Gemäß einer alternativen Ausführungsform umfasst das Umlenkelement ein Prisma.

Gemäß einer weiteren Ausführungsform weist die Messvorrichtung eine Interferometerkavität auf und das Umlenkelement ist außerhalb der Interferometerkavität angeordnet. Der Bereich des Interferometers, in dem die Prüfwelle und die Referenzwelle nicht im gleichen Strahlengang verlaufen, wird Interferometerkavität bezeichnet. Mit anderen Worten ist das Umlenkelement im Strahlengang der Messstrahlung noch vor Abspaltung der Referenzwelle angeordnet. Die Abspaltung der Referenzwelle kann in diesem Fall mittels des diffraktiven optischen Elements erfolgen.

Gemäß einer alternativen Ausführungsform weist die Messvorrichtung eine Interferometerkavität auf und das Umlenkelement ist innerhalb der Kavität angeordnet.

Weiterhin wird erfindungsgemäß ein Verfahren zur interferometrischen Formvermessung einer jeweiligen Oberfläche von Testobjekten bereitgestellt. Das Verfahren umfasst die Schritte: Einstrahlen einer Messstrahlung mittels eines Umlenkelements auf ein erstes diffraktives optisches Element zum Erzeugen einer ersten Prüfwelle und interferometrisches Vermessen der Oberflächenform eines ersten der Testobjekte mittels der ersten Prüfwelle, Verändern der Stellung des Umlenkelements durch eine Kombination aus einer Kippbewegung und einer Translationsbewegung, sowie Einstrahlen der Messstrahlung mittels des bezüglich der Stellung veränderten Umlenkelements auf ein zweites diffraktives optisches Element zum Erzeugen einer zweiten Prüfwelle und interferometrisches Vermessen der Oberflächenform eines zweiten der Testobjekte mittels der zweiten Prüfwelle. Insbesondere wird bei der Translationsbewegung eine Position des Umlenkelements um mindestens 2 mm, insbesondere um mindestens 10 mm verschoben.

Gemäß einer Ausführungsform des erfindungsgemäßen Verfahrens wird das zweite diffraktive optische Element vor der Einstrahlung der Messstrahlung mittels des bezüglich der Stellung veränderten Umlenkelements anstelle des ersten optischen Elements in einem Prüfwellenerzeugungsabschnitt einer interferometrischen Messvorrichtung angeordnet. Insbesondere wird das zweite diffraktive optischen Element in einer Halteeinrichtung des Prüfkopfes für ein diffraktives optisches Element zur Prüfwellenerzeugung angeordnet. Diese Halteeinrichtung kann insbesondere verkippt und/oder verschoben werden.

Gemäß einer weiteren Ausführungsform wird das zweite diffraktive optische Element in einer Drehstellung angeordnet, welche von der Drehstellung des ersten diffraktiven optischen Elements abweicht. Die Abweichung beträgt mindestens 2 mrad, insbesondere mindestens 10 mrad. Die Wahl der jeweiligen Drehstellung der beiden diffraktiven optischen Elemente kann derart erfolgen, dass der Strahlengang der Prüfwelle sowie ggf. einer Referenzwelle optimal an die räumlichen Gegebenheiten der interferometrischen Messvorrichtung, insbesondere in Bezug auf die jeweilige Geometrie der Testobjekte und die daraus resultierende Konfiguration der betreffenden Prüfwelle, angepasst ist.

Die bezüglich der vorstehend aufgeführten Ausführungsformen, Ausführungsbeispiele bzw. Ausführungsvarianten, etc. der erfindungsgemäßen Messvorrichtung angegebenen Merkmale können entsprechend auf das erfindungsgemäße Messverfahren übertragen werden. Diese und andere Merkmale der erfindungsgemäßen Ausführungsformen werden in der Figurenbeschreibung und den Ansprüchen erläutert. Die einzelnen Merkmale können entweder separat oder in Kombination als Ausführungsformen der Erfindung verwirklicht werden. Weiterhin können sie vorteilhafte Ausführungsformen beschreiben, die selbstständig schutzfähig sind und deren Schutz ggf. erst während oder nach Anhängigkeit der Anmeldung beansprucht wird.

### Kurzbeschreibung der Zeichnungen

Die vorstehenden, sowie weitere vorteilhafte Merkmale der Erfindung werden in der nachfolgenden detaillierten Beschreibung beispielhafter erfindungsgemäßer Ausführungsformen unter Bezugnahme auf die beigefügten schematischen Zeichnungen veranschaulicht. Es zeigt:
Fig. 1 eine erste Ausführungsform einer Messvorrichtung zur interferometrischen Formvermessung einer Oberfläche eines Testobjekts mit einem Umlenkelement, welches mittels einer Halteeinrichtung verkippbar und verschiebbar gelagert ist, wobei die Messvorrichtung in einer Konfiguration zur Vermessung eines ersten Testobjekts angeordnet ist,
Fig. 2 die Messvorrichtung gemäß Fig. 1 in einer Konfiguration zur Vermessung eines zweiten Testobjekts,
Fig. 3 eine weitere Ausführungsform einer Messvorrichtung zur interferometrischen Formvermessung einer Oberfläche eines Testobjekts mit einer alternativen Halteeinrichtung zum Verkippen und Verschieben des Umlenkelements durch Rotation um eine außerhalb des Umlenkelements angeordnete Rotationsachse,Fig. 4 eine Veranschaulichung vorteilhafter Bereiche für die Anordnung der Rotatinosachse,
Fig. 5 einer weitere Ausführungsform einer Messvorrichtung zur interferometrischen Formvermessung mit einer Halteeinrichtung zur Rotation des Umlenkelements um eine außerhalb des Umlenkelements angeordnete Rotationsachse,
Fig. 6 eine alternative Ausführungsform des Umlenkelements in Gestalt eines Reflexionsprismas,
Fig. 7 eine weitere alternative Ausführungsform des Umlenkelements eines die Lichtbrechung an den Seitenflächen ausnutzenden Prismas,
Fig. 8 eine weitere Ausführungsform einer Messvorrichtung zur interferometrischen Formvermessung einer Oberfläche eines Testobjekts, bei der dem Umlenkelement ein Kollimator vorgelagert ist, sowie
Fig. 9 einer weitere Ausführungsform einer Messvorrichtung zur interferometrischen Formvermessung einer Oberfläche eines Testobjekts, welche als Fizeau-Interferometer ausgelegt ist.

### Detaillierte Beschreibung erfindungsgemäßer Ausführungsbeispiele

In den nachstehend beschriebenen Ausführungsbeispielen bzw. Ausführungsformen oder Ausführungsvarianten sind funktionell oder strukturell einander ähnliche Elemente soweit wie möglich mit den gleichen oder ähnlichen Bezugszeichen versehen. Daher sollte zum Verständnis der Merkmale der einzelnen Elemente eines bestimmten Ausführungsbeispiels auf die Beschreibung anderer Ausführungsbeispiele oder die allgemeine Beschreibung der Erfindung Bezug genommen werden.

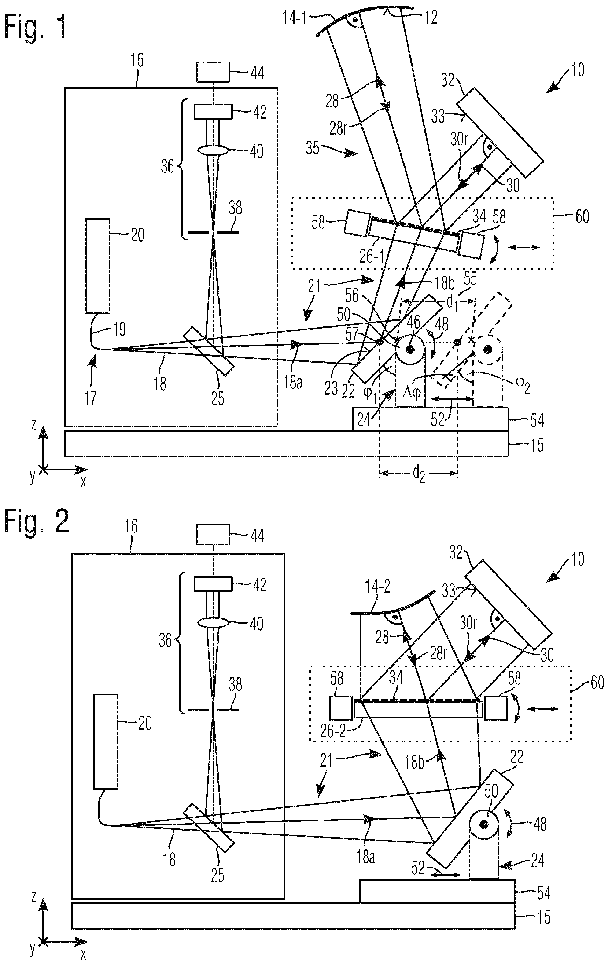

Zur Erleichterung der Beschreibung ist in der Zeichnung ein kartesisches xyz-Koordinatensystem angegeben, aus dem sich die jeweilige Lagebeziehung der in den Figuren dargestellten Komponenten ergibt. In Fig. 1 verläuft die y-Richtung senkrecht zur Zeichenebene in diese hinein, die x-Richtung nach rechts und die z-Richtung nach oben.

In Fig. 1 wird ein Ausführungsbeispiel einer Messvorrichtung 10 zur interferometrischen Formvermessung einer optischen Oberfläche 12 eines Testobjekts 14-1 veranschaulicht. Mit der Messvorrichtung 10 lässt sich insbesondere eine Abweichung der tatsächlichen Form der Oberfläche 12 von einer Sollform bestimmen. Als Testobjekt 14-1 kann beispielsweise ein Spiegel eines Projektionsobjektivs für die EUV-Mikrolithographie mit einer nicht-sphärischen Oberfläche zur Reflexion von EUV-Strahlung mit einer Wellenlänge von kleiner als 100 nm, insbesondere einer Wellenlänge von etwa 13,5 nm oder etwa 6,8 nm, vorgesehen sein. Die nicht-sphärische Oberfläche des Spiegels kann beispielsweise eine Freiformoberfläche mit einer Abweichung von jeder rotationssymmetrischen Asphäre von mehr als 5 µm und einer Abweichung von jeder Sphäre von mindestens 1 mm umfassen.

Die Messvorrichtung 10 enthält einen Rahmen 15, ein Beleuchtungs-/ Detektionsmodul 16, ein Umlenkelement 22, eine Halteeinrichtung 24 zum Halten des Umlenkelements 22, ein diffraktives optisches Element 26-1 sowie ein Referenzelement 32. Das Beleuchtungs-/Detektionsmodul 16 umfasst eine Strahlungsquelle 17, einen Strahlteiler 25 sowie eine Beobachtungseinheit 36.

Die Strahlungsquelle 17 dient der Bereitstellung einer ausreichend kohärenten Messstrahlung 18 als Eingangswelle. In diesem Ausführungsbeispiel umfasst die Strahlungsquelle 17 einen Wellenleiter 19 mit einer Austrittsfläche, an welcher die Eingangswelle ihren Ursprung hat. Der Wellenleiter 20 ist an ein Strahlungserzeugungsmodul 20, z.B. in Gestalt eines Lasers, angeschlossen. Dazu kann beispielsweise ein Helium-Neon-Laser mit einer Wellenlänge von ungefähr 633 nm vorgesehen sein. Die Messstrahlung 18 kann aber auch eine andere Wellenlänge im sichtbaren oder nicht sichtbaren Wellenlängenbereich elektromagnetischer Strahlung aufweisen.

Die Strahlungsquelle 17 mit dem Wellenleiter 19 stellt lediglich ein Beispiel einer für die Messvorrichtung 10 verwendbaren Strahlungsquelle 17 dar. In alternativen Ausführungen kann anstelle des Wellenleiters 19 eine optische Anordnung mit Linsenelementen, Spiegelelementen oder dergleichen zur Bereitstellung einer geeigneten Eingangswelle aus der Messstrahlung 18 vorgesehen sein.

Die Messstrahlung 18 durchläuft zunächst den Strahlteiler 25 und wird daraufhin von dem Umlenkelement 22, welches in der in Fig. 1 dargestellten Ausführungsform als reflektives optisches Element mit einer Reflexionsfläche 23, d.h. als Umlenkspiegel, ausgebildet ist, auf das diffraktive optische Element 26-1 gelenkt. Mit anderen Worten ist das Umlenkelement 22 in einem Strahlengang 21 der Messstrahlung 18 dem diffraktiven optischen Element 26-1 vorgelagert. Die auf das Umlenkelement 22 eingestrahlte Messstrahlung wird in Fig. 1 mit dem Bezugszeichen 18a und die vom Umlenkelement abgestrahlte Messstrahlung 18 mit dem Bezugszeichen 18b bezeichnet. Das diffraktive optische Element 26-1 ist in einem Prüfwellenerzeugungsabschnitt 60 der Messvorrichtung 10 angeordnet. Dieser bildet einen Prüfkopf, welcher dazu dient, eine Prüfwelle 28 zum Einstrahlen auf die Oberfläche 12 des Testobjekts 14-1 zu erzeugen. Das diffraktive optische Element 26-1 erzeugt in der Ausführungsform gemäß Fig. 1 neben der Prüfwelle 28 eine Referenzwelle 30 aus der auftreffenden Messstrahlung 18b.

Weiterhin umfasst die Messvorrichtung 10 ein als reflektives optisches Element ausgebildetes Referenzelement 32 mit einer Reflexionsfläche 33 zur Reflexion der Referenzwelle 30 in eine zurücklaufende Referenzwelle 30r. Das diffraktive optische Element 26-1 ist als komplex kodiertes CGH ausgebildet und enthält Beugungsstrukturen 34, welche gemäß der in Fig. 1 dargestellten Ausführungsform zwei in einer Ebene sich überlagernd angeordnete diffraktive Strukturmuster bilden. Das diffraktive optische Element 30 wird daher auch als zweifach komplex kodiertes computer-generiertes Hologramm (CGH) bezeichnet. Alternativ könnten die Beugungsstrukturen auch mehr als zwei in einer Ebene sich überlagernd angeordnete diffraktive Strukturmuster aufweisen, z.B. fünf sich überlagernd angeordnete diffraktive Strukturmuster zur zusätzlichen Erzeugung von Kalibrierwellen.

Die beiden diffraktiven Strukturmuster des diffraktiven optischen Elements 26-1 gemäß Fig. 1 können z.B. durch ein erstes Strukturmuster in Gestalt eines Grundgitters und ein zweites diffraktives Strukturmuster in Gestalt eines Übergitters gebildet werden. Eines der diffraktiven Strukturmuster ist zur Erzeugung der Prüfwelle 28 konfiguriert, welche auf das Testobjekt 14-1 gerichtet ist und eine zumindest teilweise an eine Sollform der optischen Oberfläche 12 angepasste Wellenfront aufweist. Die Prüfwelle 28 wird an der optischen Oberfläche 12 des Testobjekts 14-1 reflektiert und läuft als zurücklaufende Prüfwelle 28r zum diffraktiven optischen Element 26-1 zurück. Aufgrund der an die Sollform der optischen Oberfläche 12 angepassten Wellenfront trifft die Prüfwelle 34 an jedem Ort der optischen Oberfläche 12 im Wesentlichen senkrecht auf die optische Oberfläche 12 auf und wird in sich zurückreflektiert.

Das andere diffraktive Strukturmuster erzeugt die Referenzwelle 30, welche auf das Referenzelement 32 gerichtet ist und eine ebene Wellenfront aufweist. In alternativen Ausführungsbeispielen kann anstelle des komplex kodierten CGHs ein einfach kodiertes CGH mit einer diffraktiven Struktur oder ein anderes optisches Gitter eingesetzt werden. Die Prüfwelle 28 kann dabei beispielsweise in einer ersten Beugungsordnung und die Referenzwelle 30 in nullter oder einer beliebigen anderen Beugungsordnung an der diffraktiven Struktur erzeugt werden.

Das Referenzelement 32 ist in der vorliegenden Ausführungsform als ebener Spiegel zur Rückreflexion der Referenzwelle 30 mit ebener Wellenfront ausgebildet. In einer anderen Ausführung kann die Referenzwelle 30 eine sphärische Wellenfront aufweisen und das Referenzelement 32 als sphärischer Spiegel ausgebildet sein.

Die von der Oberfläche 12 zurücklaufende Prüfwelle 28r durchläuft das diffraktive optische Element 26-1 erneut und wird dabei abermals gebeugt. Dabei erfolgt eine Rücktransformation der zurücklaufenden Prüfwelle 28r in eine annähernd sphärische Welle, wobei deren Wellenfront durch Abweichungen der Oberfläche 12 des Testobjekts von der Sollform entsprechende Abweichungen von einer sphärischen Wellenfront aufweist.

Auch die von der Reflexionsfläche des Referenzelements 32 reflektierte zurücklaufende Referenzwelle 30r durchläuft das diffraktive optische Element 26-1 erneut und wird dabei abermals gebeugt. Dabei erfolgt eine Rücktransformation der zurücklaufenden Referenzwelle 30r in eine sphärische Welle. In einer alternativen Ausführung mit einem Kollimator im Strahlengang der auf das diffraktive optische Element 26-1 eingestrahlten Messstrahlung 18 zur Erzeugung einer Eingangswelle mit ebener Wellenfront ist keine Anpassung der Wellenfront der zurücklaufenden Referenzwelle 30r durch das diffraktive optische Element 30 notwendig.

Der Bereich des Interferometers 10, in dem die Prüfwelle 28 bzw. 28r und die Referenzwelle 30 bzw. 30r nicht im gleichen Strahlengang verlaufen, wird Interferometerkavität bezeichnet. In der Ausführungsform gemäß Fig. 1 umfasst die Interferometerkavität 35 den Strahlengang der Prüfwelle 28 bzw. 28r zwischen dem diffraktiven optischen Element 26-1 und dem Prüfling 14-1 sowie den Strahlengang der Referenzwelle 30 bzw. 30r zwischen dem diffraktiven optischen Element 26-1 und dem Referenzelement 32. In der Ausführungsform der Messvorrichtung 10 gemäß Fig. 1 ist, wie aus der Zeichnung ersichtlich, das Umlenkelement 22 außerhalb der Interferometerkavität 35 angeordnet.

Das diffraktive optische Element 26-1 dient auch zur Überlagerung der zurücklaufenden Prüfwelle 28r mit der zurücklaufenden Referenzwelle 30r. Die zurücklaufenden Wellen 28r und 30r laufen daraufhin im Strahlengang 21 der eingehenden Messstrahlung 18 über das Umlenkelement 22 zurück zum Strahlteiler 25. Dieser führt die Kombination aus der zurücklaufenden Prüfwelle 28r und der zurücklaufenden Referenzwelle 30r aus dem Strahlengang 21 der eingestrahlten Messstrahlung 18 heraus und lenkt diese auf die Beobachtungseinheit 36.

Die zurücklaufende Prüfwelle 28r und die zurücklaufende Referenzwelle 30r treffen als konvergente Strahlen auf den Strahlteiler 25 und werden von diesem in Richtung der Beobachtungseinheit 36 reflektiert. Beide konvergente Strahlen durchlaufen eine Blende 38 sowie ein Okular 40 der Beobachtungseinheit 36 und treffen schließlich auf einen zweidimensional auflösenden Detektor 42 der Beobachtungseinheit 36. Der Detektor 42 kann beispielsweise als CCD-Sensor ausgebildet sein und erfasst ein durch die interferierenden Wellen erzeugtes Interferogramm.

Weiterhin umfasst die Messvorrichtung 10 eine Auswerteeinrichtung 44 zur Bestimmung der tatsächlichen Form der optischen Oberfläche 12 des Testobjekts 14-1 aus dem erfassten Interferogramm bzw. mehreren erfassten Interferogrammen. Dazu verfügt die Auswerteeinrichtung 44 über eine geeignete Datenverarbeitungseinheit und verwendet entsprechende, dem Fachmann bekannte Berechnungsverfahren. Alternativ oder zusätzlich kann die Messvorrichtung 10 einen Datenspeicher oder eine Schnittstelle zu einem Netzwerk enthalten, um eine Bestimmung der Oberflächenform mittels des gespeicherten bzw. über das Netzwerk übertragenen Interferogramms durch eine externe Auswertungseinheit zu ermöglichen.

Die vorstehend bereits erwähnte Halteeinrichtung 24 ist dazu konfiguriert, das Umlenkelement 22 zumindest hinsichtlich seiner Rotationsstellung zu verstellen. In der Ausführungsform gemäß Fig. 1 ermöglicht die Halteeinrichtung 24 einerseits eine Verkippung und anderseits eine Verschiebung der Position des Umlenkelements 22, d.h. eine Veränderung der Stellung des Umlenkelements 22 durch eine Kombination aus einer Kippbewegung und einer Translationsbewegung.

Im vorliegenden Fall ist eine Veränderung der Kippstellung des Umlenkelements 22 durch Ausführen einer Kippbewegung 48 möglich. Diese Kippbewegung 48 erfolgt durch Rotation bezüglich einer quer zur Ausbreitungsrichtung der eingestrahlten Messstrahlung 18a, in Fig. 1 in y-Richtung, orientierten Kippachse 28. Zur Ausführung der Kippbewegung ist ein Kippaktuator 50 vorgesehen. Die Kippachse kann dabei auf der Reflexionsfläche 23 des Umlenkelements 23 oder in einer geringfügig von der Reflexionsfläche 23 beabstandeten Position, wie in der Konfiguration des in Fig. 1 veranschaulichten Ausführungsbeispiel gezeigt, angeordnet sein. In Fig. 1 ist das Umlenkelement 22 in der Darstellung mit durchgezogenen Linien in einer ersten Kippstellung mit einem Kippwinkel ϕ₁ gegenüber der z-Achse sowie in der Darstellung mit unterbrochenen Linien in einer zweiten Kippstellung mit einem Kippwinkel ϕ₂ dargestellt. Die Verkippbarkeit des Umlenkelements 22, dargestellt durch den Differenzwinkel Δϕ= ϕ₁-ϕ₂, beträgt mindestens 2 mrad, insbesondere mindestens 10 mrad. Alternativ oder zusätzlich zur Kippachse 46 kann eine parallel zur Ausbreitungsrichtung der eingestrahlten Messstrahlung 18a bzw. in x-Richtung gemäß Fig. 1 angeordnete Kippachse vorgesehen sein.

Die Verschiebbarkeit der Position des Umlenkelements 22 ist für zumindest einen Translationsfreiheitsgrad 52 vorgesehen. Im vorliegenden Fall ist der Transationsfreiheitsgrad parallel zur Ausbreitungsrichtung der eingestrahlten Messstrahlung 18a, d.h. gemäß Fig. 1 in x-Richtung, ausgerichtet. Zusätzlich kann beispielsweise auch ein quer zur Ausbreitungsrichtung der eingestrahlten Messstrahlung 18a bzw. in y-Richtung gemäß Fig. 1 ausgerichteter Translationsfreiheitsgrad vorgesehen sein. Zum Ausführen der Verschiebung des Umlenkelements 22 ist ein Verschiebeaktuator 54 vorgesehen. In Fig. 1 ist das Umlenkelement 22 in der Darstellung mit durchgezogenen Linien in einer ersten Verschiebeposition sowie in der Darstellung mit unterbrochenen Linien in einer zweiten Verschiebeposition dargestellt.

Die Verschiebbarkeit des Umlenkelements 22 ist derart konfiguriert, dass die Position des Umlenkelements 22 um mindestens 2 mm, insbesondere um mindestens 10 mm verschoben wird. Dies führt insbesondere dazu, dass sich nach der Verschiebung die jeweilige Position des geometrischen Schwerpunkts 56 des Umlenkelements 22, um einen Abstand d₁ (auch Verschiebung 55 bezeichnet) von mindestens 2 mm, insbesondere mindestens 10 mm, in Richtung des betreffenden Translationsfreiheitsgrads unterscheiden. Alternativ oder zusätzlich ermöglicht die Verschiebbarkeit eine Veränderung der Position eines mittleren Auftreffpunkts 57 der Messstrahlung 18a auf dem Umlenkelement 22 um mindestens 2 mm, insbesondere um mindestens 10 mm in Richtung des betreffenden Translationsfreiheitsgrads.

Die beschriebenen Verstell-Freiheitsgrade der Kipp- sowie Translationsstellung des Umlenkelements ermöglichen es, die vom Umlenkelement 22 abgestrahlte Messstrahlung 18b positions- und orientierungsgenau auf das diffraktive optische Element 26-1 einzustrahlen. Dabei kann die Position und Orientierung der Messstrahlung 18b gezielt auf die Struktur des zur Vermessung des betreffenden Testobjekts 14-1 gewählten diffraktiven optischen Elements 26 sowie auf dessen dazu gewählte Position und Orientierung eingestellt werden.

Mit anderen Worten wird zur Vermessung der Oberfläche 12 eines Testobjekts 14-1 ein speziell an die Solloberflächenform des betreffenden Testobjekts 14-1 angepasstes diffraktives optisches Element 26-1 gefertigt. Dabei wird für die Beugungsstrukturen 34 auf dem diffraktiven optischen Element 26-1 ein derartiges Design gewählt, dass die davon erzeugte Prüfwelle 28 mit einer der Solloberflächenform entsprechenden Wellenfront sowie die Referenzwelle 30 in Richtungen abgestrahlt werden, welche eine kompakte Anordnung von Testobjekt 14-1 und Referenzelement 32 innerhalb der Messvorrichtung 10 ermöglichen.

Abhängig vom gewählten Design der Beugungsstrukturen 34 ergibt sich eine bevorzugte Orientierung des diffraktiven optischen Elements 26-1 innerhalb der Messvorrichtung 10, welche mittels einer Halteeinrichtung 58 des Prüfkopfes bezüglich mindestens einer Kippachse verkippbar und/oder bezüglich mindestens eines Translationsfreiheitsgrads verschiebbar ist. Gemäß der in Fig. 1 veranschaulichten Ausführungsform ermöglicht die Halteeinrichtung 58 eine Verkippung des diffraktiven optischen Elements 26-1 bezüglich der y-Achse und eine Verschiebung in Richtung der x-Achse.

Zur Vermessung der Oberflächenform des Testobjekts 14-1 wird nun das dazu vorgesehene optische Element 26-1 mittels der Halteeinrichtung 58 in der bevorzugten Orientierung und Position angeordnet. Daraus ergibt sich ein passender Einstrahlwinkel für die Messstrahlung 18b auf das diffraktive optische Element 34. Dieser Einstrahlwinkel wird nun durch geeignete Einstellung von Kippwinkel und Translationsposition des Umlenkelements 22 mittels der Halteeinrichtung 24 bewirkt. Insbesondere werden Kippwinkel und Translationsposition des Umlenkelements 22 so gewählt, dass das diffraktive optische Element 34 von der Messstrahlung 18b zentral getroffen wird.

Soll nun die Oberflächenform eines weiteren Testobjekts 14-2 vermessen werden, so wird gemäß der Veranschaulichung in Fig. 2 das diffraktive optische Element 26-1 durch ein weiteres diffraktives optisches Element 26-2 in der Halteeinrichtung 58 des Prüfkopfes ersetzt. Die Beugungsstrukturen 34 des weiteren diffraktiven optischen Elements 26-2 sind speziell zur Vermessung der Oberflächenform des weiteren Testobjekts 14-2 gefertigt. Dabei sind die Beugungsstrukturen 34 so gewählt, dass die davon erzeugte Prüfwelle 28 eine an die Solloberflächenform des Testobjekts 14-2 angepasste Wellenfront aufweist und die Konfiguration der Strahlwege der Prüfwelle 28 sowie der Referenzwelle 30 an die räumlichen Gegebenheiten in der Messvorrichtung 10 angepasst sind. Aus dem Design der Beugungsstrukturen 34 des weiteren diffraktiven optischen Elements 26-2 ergibt sich unter Berücksichtigung der räumlichen Gegebenheiten in der Messvorrichtung 10 eine bevorzugte Orientierung und Positionierung des diffraktiven optischen Elements 26-2. Diese Orientierung und Positionierung wird mittels der Halteeinrichtung 58 des Prüfkopfes eingestellt.

Aus dieser Orientierung und Positionierung des diffraktiven optischen Elements 26-2 ergibt sich unter Berücksichtigung des Designs der Beugungsstrukturen 34 ein passender Einstrahlwinkel für die Messstrahlung 18b auf das diffraktive optische Element 34. Dieser Einstrahlwinkel wird nun durch geeignete Veränderung der Stellung des Umlenkelements 22 mittels der Halteeinrichtung 24 eingestellt. Die in Fig. 2 veranschaulichte Stellung des Umlenkelements 22 entspricht der in Fig. 1 mit unterbrochenen Linien dargestellten und bereits vorstehend näher beschriebenen Stellung.

Damit umfasst die Veränderung der Stellung des Umlenkelements 22 eine Veränderung von Kippwinkel und Translationsposition des Umlenkelements 22 mittels der Halteeinrichtung 24. Die Veränderung der Translationsposition des Umlenkelements 22 dient im Wesentlichen dazu, den veränderten Kippwinkel dahingehend auszugleichen, dass der Auftreffort auf das diffraktive optische Element 26-2 weiterhin im Bereich des Prüfwellenerzeugungsabschnitts 60 liegt. Mit anderen Worten müsste bei fehlender Translation des Umlenkelements 22 die Position des diffraktiven optischen Elements 26-2 so weit verschoben werden, dass dieses nicht mehr im Bereich des Prüfwellenerzeugungsabschitts 60 zu liegen käme bzw. dessen Position nicht mit den räumlichen Gegebenheiten in der Messvorrichtung 10 in Einklang zu bringen wäre.

In der in Fig. 2 dargestellten Konfiguration der Messvorrichtung 10 wird nun, analog wie bezüglich Fig. 1 beschrieben, die tatsächliche Form der optischen Oberfläche 12 des Testobjekts 14-2 aus einem oder mehreren durch Überlagerung der zurücklaufenden Prüfwelle 28r mit der zurücklaufenden Referenzwelle 30r erzeugten Interferogrammen ermittelt.

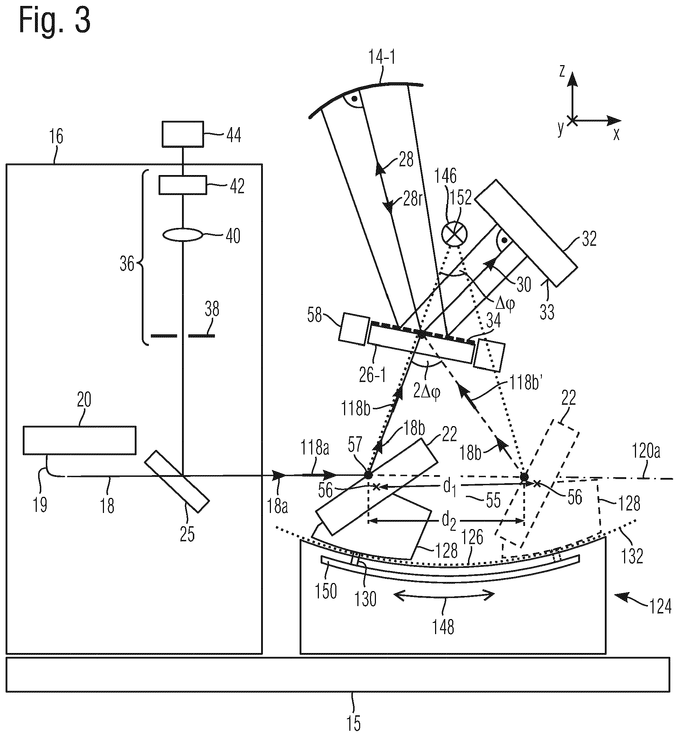

In Fig. 3 wird eine weitere Ausführungsform der interferometrischen Messvorrichtung 10 veranschaulicht. Diese unterscheidet sich von der Messvorrichtung 10 gemäß Fig. 1 lediglich durch die Konfiguration der Halteeinrichtung 24 für das Umlenkelement 22. Diese Halteeinrichtung ist in der Ausführungsform gemäß Fig. 3 mit dem Bezugszeichen 124 bezeichnet. In der Darstellung gemäß Fig. 3 ist der Strahlengang der Messstrahlung 18 zur besseren Anschaulichkeit in bestimmten Strahlabschnitten anstatt mit drei Linien lediglich mit einer Linie eingezeichnet.

Die Halteeinrichtung 124 umfasst eine am Rahmen 15 befestigte gebogene Führungsschiene 126 zum Führen eines am Umlenkelement 22 befestigten Führungsteils 128. Die Biegung der Führungsschiene 126 verläuft dabei entlang eines Kreislinienabschnitts 132. Dieser ist Teil eines Kreises in der Zeichenebene mit dem Schnittpunkt einer Rotationsachse 146 mit der Zeichenebene als Mittelpunkt 152. Das Umlenkelement 22 kann bezüglich der Rotationsachse 146 mittels der Halteeinrichtung 124 in einer Rotationsbewegung 148 bewegt werden. Die Rotationsbewegung 148 entspricht einer Kombination aus einer Kippbewegung und einer Translationsbewegung. Die Zeichenebene ist dabei diejenige Ebene, welche vom Richtungsvektor 118a der eingestrahlten Messstrahlung 18a und dem Richtungsvektor 118b der abgestrahlten Messstrahlung 18b aufgespannt ist. Diese Ebene wird in diesem Text auch als Strahlebene bezeichnet.

Die Rotationsachse 146 ist derart angeordnet, dass deren Schnittpunkt mit der Zeichenebene bzw. Strahlebene rechts oberhalb des mittleren Auftreffpunktes 57 der eingestrahlten Messstrahlung 18a angeordnet ist. Dabei ist der genannte Schnittpunkt in der Strahlebene einerseits im oberen Halbraum bezüglich einer durch den Richtungsvektor 118a definierten Einstrahlachse 120a und damit auf der gleichen Seite bezüglich der Einstrahlachse 120a wie das diffraktive optische Element 26-1 angeordnet. Durch die genannte Anordnung der Rotationsachse 146 wird bei Ausführung der Rotationsbewegung 148 die Position des Umlenkelements 22 um mindestens 2 mm, insbesondere um mindestens 10 mm, verschoben (Translationsanteil der Rotationsbewegung 148) und um den Differenzkippwinkel Δϕ von mindestens 2 mrad, insbesondere von mindestens 10 mrad verkippt (Kippanteil der Rotationsbewegung 148).

Die Halteeinrichtung 124 umfasst einen in das Modul der Führungsschiene 126 integrierten Aktuator 150 zum Ausführen der Rotationsbewegung bezüglich der Rotationsachse 146. Dabei zieht der Aktuator 150 in der gezeigten Ausführungsform ein stiftartiges Zugelement 130 des Führungsteils 128 entlang des Kreislinienabschnitts 132 entlang. In Fig. 3 ist neben der vorstehend beschriebenen, mit durchgezogenen Linien dargestellten, ersten Stellung des Umlenkelements 22 zur Bestrahlung des diffraktiven optischen Elements 26-1 eine zweite Stellung des Umlenkelements 22 mit unterbrochenen Linien eingezeichnet. In dieser Stellung ist das Umlenkelement 22 gegenüber der ersten Stellung um Δϕ verkippt. Die zweite Stellung dient der Anstrahlung des bereits in Fig. 2 veranschaulichten weiteren diffraktiven optischen Elements 26-2 mit der Messstrahlung 18b, wobei der Richtungsvektor 118b' gegenüber dem Richtungsvektor 118b der ersten Stellung um 2Δϕ verkippt ist.

Dies führt insbesondere dazu, dass sich nach der Rotationsbewegung 148 die jeweilige Position des geometrischen Schwerpunkts 56 des Umlenkelements 22, um einen Abstand d₁ (auch Verschiebung 55 bezeichnet) von mindestens 2 mm, insbesondere mindestens 10 mm, in Richtung des betreffenden Translationsfreiheitsgrads unterscheiden. Alternativ oder zusätzlich ermöglicht die Verschiebbarkeit eine Veränderung der Position eines mittleren Auftreffpunkts 57 der Messstrahlung 18a auf dem Umlenkelement 22 um mindestens 2 mm, insbesondere um mindestens 10 mm in Richtung des betreffenden Translationsfreiheitsgrads.

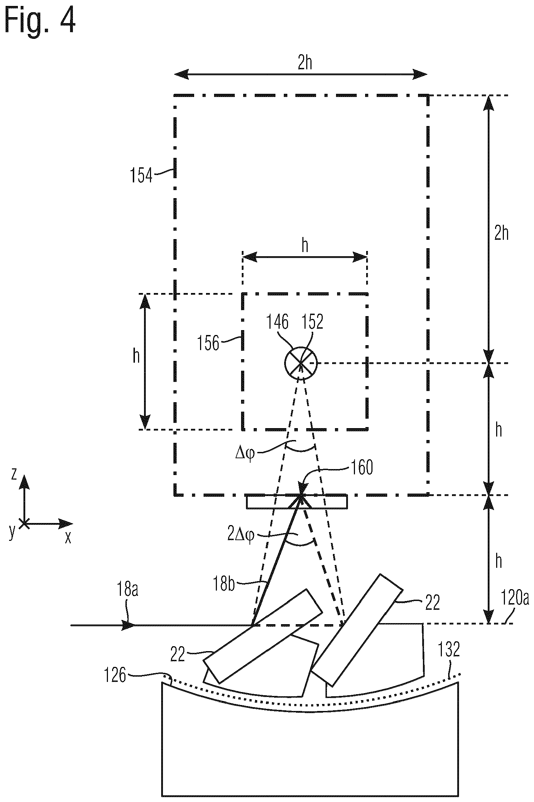

Fig. 4 dient der Veranschaulichung vorteilhafter Bereiche für die Anordnung der Rotationsachse 146 bei der Ausführung der interferometrischen Messanordnung 10 mit einer gebogenen Führungsschiene 126 gemäß Fig. 3. Wie bereits vorstehend erwähnt, entspricht der Mittelpunkt 152 des durch die Führungsschiene 126 definierten Kreislinienabschnitts 132 dem Schnittpunkt der Rotationsachse 146 mit der Zeichenebene.

Ein bevorzugter Bereich 154 für den Mittelpunkt 152 der Führungsschiene 126 ist durch ein Rechteck definiert, welches in horizontaler Richtung, also parallel zur Einstrahlachse 120a eine Ausdehnung von 2h und in vertikaler Richtung, also senkrecht zur Einstrahlachse 120a eine Ausdehnung von 3h aufweist. Unter h ist der Abstand des diffraktiven optischen Elements 26-1 von der Einstrahlachse 120, genauer der Abstand eines mittleren Anstrahlpunkts 160 der Messstrahlung 16b am diffraktiven optischen Element 26-1 von der Einstrahlachse 120, zu verstehen. Zumindest für eine Ausführungsvariante ist der Abstand für das zweite diffraktive optische Element 26-1 unverändert. Das den bevorzugten Bereich 154 definierende Rechteck betrifft die Fläche oberhalb des diffraktiven optischen Elements 26-1 mit den Abmessungen 2h x 3h, wobei der Anstrahlpunkt 160 in der Mitte der unteren Kante des Rechtecks angeordnet ist.

Ein besonders bevorzugter Bereich 156 für den Mittelpunkt 152 ist durch ein weiteres Rechteck definiert, welches sowohl in horizontaler als auch in vertikaler Richtung eine Ausdehnung von 1h aufweist. Der Bereich 156 ist insbesondere derart angeordnet, dass sein Mittelpunkt von dem Anstrahlpunkt 160 der Messstrahlung am diffraktiven optischen Element 26-1 den Abstand h aufweist. In der Darstellung gemäß Fig. 4 ist eine besonders vorteilhafte Ausführungsvariante gezeigt, bei welcher der der gebogenen Führungsschiene 126 zugeordnete Mittelpunkt 152 mit dem Mittelpunkt des Bereichs 156 übereinstimmt.

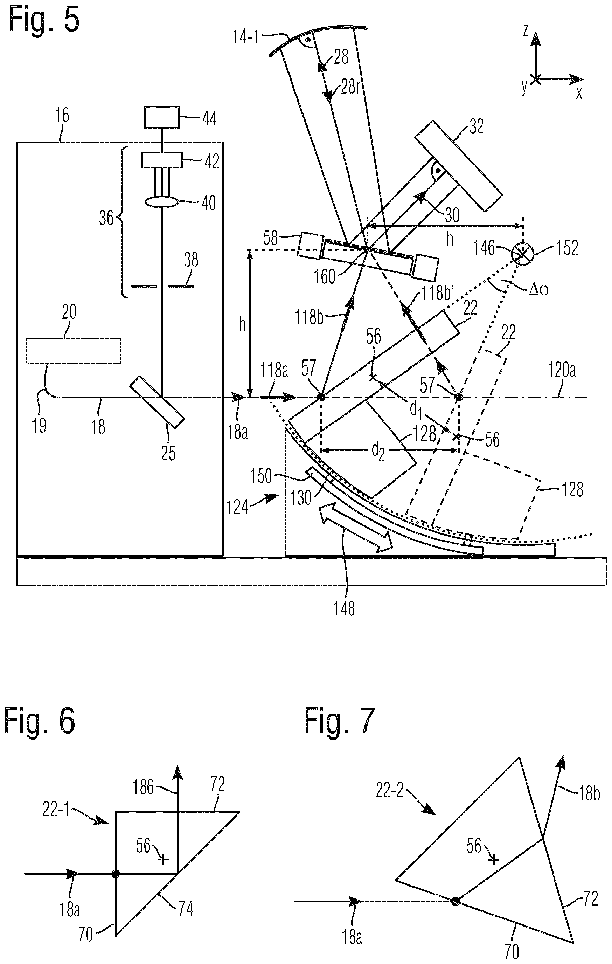

Bei der in Fig. 3 dargestellten Ausführungsform befindet sich der Mittelpunkt 152 innerhalb des besonders bevorzugten Bereichs. In Fig. 5 ist eine weitere Ausführungsform dargestellt, welche sich von der Ausführungsform gemäß Fig. 3 lediglich darin unterscheidet, dass der der gebogenen Führungsschiene zugeordnete Mittelpunkt 152 sich weiter rechts und weiter unten befindet. Der Mittelpunkt 152 ist etwa in dem Abstand h rechts vom Anstrahlpunkt 160 und in vertikaler Richtung auf etwa der gleichen Höhe wie der Anstrahlpunkt 160 und damit am rechten unteren Eck des bevorzugten Bereichs 154 gemäß Fig. 4 angeordnet ist.

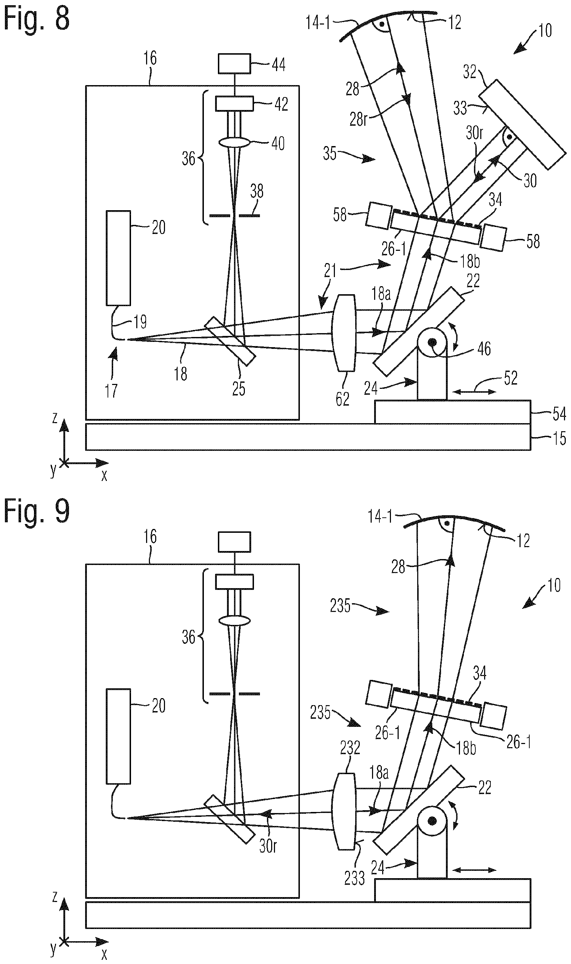

In Fig. 8 ist eine weitere Ausführungsform einer Messvorrichtung 10 zur interferometrischen Formvermessung einer optischen Oberfläche 12 eines Testobjekts 14-1 veranschaulicht. Diese Ausführungsform unterscheidet sich von der Ausführungsform gemäß Fig. 1 lediglich darin, dass dem Umlenkelement 22 ein Kollimator 62 vorgelagert ist. Die Messstrahlung 18a und die Messstrahlung 18b treffen damit nicht, wie in Fig.1 als expandierende Welle, sondern jeweils als ebene Welle auf das Umlenkelement 22 bzw. das diffraktive optische Element 26-1 auf.

In Fig. 9 ist eine weitere Ausführungsform einer Messvorrichtung 10 zur interferometrischen Formvermessung einer optischen Oberfläche 12 eines Testobjekts 14-1 veranschaulicht. Die Messvorrichtung 10 gemäß Fig. 9 unterscheidet sich dahingehend von der Messvorrichtung 10 gemäß Fig. 8, dass anstatt des als reflektives optisches Element ausgebildeten Referenzelements 32 ein Referenzelement 232 in Gestalt eines Fizeau-Kollimators vorgesehen ist. Der Fizeau-Kollimator dient anstelle des diffraktiven optischen Elements 26-1 gemäß Fig. 7 zur Erzeugung der Referenzwelle 30 aus der Messstrahlung 18, wobei die Referenzwelle hier bereits bei der Erzeugung rücklaufend ist und daher mit dem Bezugszeichen 30r bezeichnet wird. Der Fizeau-Kollimator kann auch durch die Kombination eines Kollimators und eines separaten Fizeauelements ersetzt werden.

Das als Fizeau-Kollimator konfigurierte Referenzelement 232 ist im Strahlengang der eingehenden Messstrahlung 18 vor dem Umlenkelement 22 angeordnet und weist eine Fizeau-Fläche 233 auf, an der ein Teil der eingehenden Messstrahlung 18 als die rücklaufende Referenzwelle 30r reflektiert wird. Die Fizeau-Fläche 233 ist als plane Fläche ausgebildet. Die Messvorrichtung 10 gemäß Fig. 7 ist damit als Fizeau-Interferometer konfiguriert. Da nun die Referenzwelle 30 nicht mehr durch das diffraktive optische Element 26-1 erzeugt wird, kann dieses mit einfach kodierten Beugungsstrukturen 34 ausgeführt werden.

Wie vorstehend erwähnt, wird der Bereich des Interferometers 10, in dem die Prüfwelle 28 und die Referenzwelle 30 nicht im gleichen Strahlengang verlaufen, als Interferometerkavität bezeichnet. In der Ausführungsform gemäß Fig. 7 umfasst die Interferometerkavität 235 den Strahlengang der Messstrahlung 18a nach Durchtritt durch die Fizeau-Fläche 233 sowie den Strahlengang der Prüfwelle 28 zwischen dem diffraktiven optischen Element 26-1 und dem Prüfling 14-1. In der Ausführungsform der Messvorrichtung 10 gemäß Fig. 7 ist, wie aus der Zeichnung ersichtlich, das Umlenkelement 22 innerhalb der Interferometerkavität 235 angeordnet.

Die Ausführungsform der Halteeinrichtung 124 gemäß Fig. 3 kann anstatt der Halteeinrichtung 24 in die Ausführungsformen der Messvorrichtung 10 gemäß der Figuren 8 und 9 integriert werden.

In den Figuren 6 und 7 sind alternative Ausführungsformen für das Umlenkelement 22 veranschaulicht. Anders als in den Figuren 1 bis 5 oder 8 und 9, in dem ein als Spiegel konfiguriertes Umlenkelement 22 dargestellt ist, kann dieses auch als Prisma 22-1 bzw. 22-2 konfiguriert sein. In der Ausführungsform gemäß Fig. 6 ist das Prisma 22-1 als Reflexionsprisma ausgeführt und in der entsprechenden Messvorrichtung 10 gemäß einer der Figuren 1 bis 5 oder 8 und 9 derart angeordnet, dass die eingestrahlte Messstrahlung 18a senkrecht auf eine Einstrahlprismenfläche 70 auftrifft. Von dort läuft die Messstrahlung 18a im Inneren des Prismas 22-1 auf eine Reflexionsprismenfläche 74 zu, wird dort reflektiert und läuft dann im Inneren des Prismas 22-1 weiter, bis es an einer Abstrahlprismenfläche 72 als abgestrahlte Messstrahlung 18b aus dem Prisma 22-1 austritt.

In der Ausführungsform gemäß Fig. 7 ist das Prisma 22-2 zur Ausnutzung der Lichtbrechung an den Prismenflächen konfiguriert und in der entsprechenden Messvorrichtung 10 gemäß einer der Figuren 1 bis 5 oder 8 und 9 derart angeordnet, dass die eingestrahlte Messstrahlung 18a in einem schrägen Winkel auf die Einstrahlfläche 70 auftrifft. Beim Eintritt ins Prisma 22-2 wird die Messstrahlung 18a dann zum Lot hin gebrochen, läuft durch das Innere des Prismas 22-2 und wird beim Austritt aus dem Prisma 22-2 an der anders als die Einstrahlprismenfläche 70 orientierten Abstrahlprismenfläche 72 wieder vom Lot weg gebrochen.

Die vorstehend unter Bezugnahme auf die Figuren 1 bis 3 erläuterten Maße bei der Verschiebung des geometrischen Schwerpunkts 56 bzw. des mittleren Auftreffpunktes 57 bei der Veränderung der Stellung des Umlenkelements 22 treffen entsprechend auf den jeweiligen geometrischen Schwerpunkt 56 bzw. den mittleren Auftreffpunkt 57 der Prismen 22-1 und 22-2 zu.

Die vorstehende Beschreibung beispielhafter Ausführungsbeispiele, Ausführungsformen bzw. Ausführungsvarianten ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren. Daher sollen alle derartigen Abänderungen und Modifikationen, insoweit sie in den Rahmen der Erfindung gemäß der Definition in den beigefügten Ansprüchen fallen, sowie Äquivalente vom Schutz der Ansprüche abgedeckt sein.

### Bezugszeichenliste

- 10: Messvorrichtung
- 12: optische Oberfläche
- 14-1: Testobjekt
- 15: Rahmen
- 16: Beleuchtungs-/Detektionsmodul
- 17: Strahlungsquelle
- 18: Messstrahlung
- 18a: eingestrahlte Messstrahlung
- 18b: abgestrahlte Messstrahlung
- 19: Wellenleiter
- 20: Strahlungserzeugungsmodul
- 21: Strahlengang der Messstrahlung
- 22: Umlenkelement
- 22-1: Prisma
- 22-2: Prisma
- 23: Reflexionsfläche
- 24: Halteeinrichtung
- 25: Strahlteiler
- 26-1: diffraktives optisches Element
- 26-2: diffraktives optisches Element
- 28: Prüfwelle
- 28r: zurücklaufende Prüfwelle
- 30: Referenzwelle
- 30r: zurücklaufende Referenzwelle
- 32: Referenzelement
- 33: Reflexionsfläche
- 34: Beugungsstrukturen
- 35: Interferometerkavität
- 36: Beobachtungseinheit
- 48: Blende
- 40: Okular
- 42: Detektor
- 44: Auswerteeinrichtung
- 46: Kippachse
- 48: Kippbewegung
- 50: Kippaktuator
- 52: Translationsfreiheitsgrad
- 54: Verschiebeaktuator
- 55: Verschiebung
- 56: geometrischer Schwerpunkt
- 57: mittlerer Auftreffpunkt
- 58: Halteeinrichtung
- 60: Prüfwellenerzeugungsabschnitt
- 62: Kollimator
- 70: Einstrahlprismenfläche
- 72: Abstrahlprismenfläche
- 74: Reflexionsprismenfläche
- 118a: Richtungsvektor
- 118b: Richtungsvektor
- 118b': Richtungsvektor
- 120a: Einstrahlachse
- 120b: Abstrahlachse
- 124: Halteeinrichtung
- 126: gebogene Führungsschiene
- 128: Führungsteil
- 130: Zugelement
- 132: Kreislinienabschnitt
- 146: Rotationsachse
- 148: Rotationsbewegung
- 150: Aktuator
- 152: Mittelpunkt
- 154: bevorzugter Bereich
- 156: besonders bevorzugter Bereich
- 158: Mittelpunkt
- 160: mittlerer Anstrahlpunkt
- 232: Referenzelement
- 233: Fizeau-Fläche
- 235: Interferometerkavität

## Patentansprüche

1. Messvorrichtung (10) zur interferometrischen Formvermessung einer Oberfläche (12) eines Testobjekts (14-1) mit:
- einem diffraktiven optischen Element (26-1), welches dazu konfiguriert ist, aus einer eingestrahlten Messstrahlung (18) eine zum Einstrahlen auf die Oberfläche des Testobjekts konfigurierte Prüfwelle (28) zu erzeugen und dazu eine Wellenfront der Prüfwelle an eine Sollform der Oberfläche des Testobjekts anzupassen,
- einem Referenzelement (32) zur Reflexion einer Referenzwelle (30)
- einem dem diffraktiven optischen Element (26-1) im Strahlengang der Messstrahlung vorgelagerten Umlenkelement (22), sowie
- einer Halteeinrichtung (24, 124) zum Halten des Umlenkelements, welches dazu konfiguriert ist, eine Stellung des Umlenkelements durch eine Kombination aus einer Kippbewegung (48) und einer Translationsbewegung (52) zu verändern.

2. Messvorrichtung nach Anspruch 1,
wobei die Halteeinrichtung (24) dazu konfiguriert ist, mittels der Translationsbewegung eine Position des Umlenkelements (22) um mindestens 2 mm zu verschieben.

3. Messvorrichtung nach Anspruch 1 oder 2,
bei der die Halteeinrichtung (24, 124) dazu konfiguriert ist, mittels der Kippbewegung eine Kippstellung des Umlenkelements (22) um mindestens 2 mrad zu verändern,

4. Messvorrichtung nach einem der vorausgehenden Ansprüche,
bei der die Halteeinrichtung (24, 124) einen Kippaktuator (50) zur Ausführung der Kippbewegung und einen separaten Verschiebeaktuator (54) zur Ausführung der Translationsbewegung umfasst.

5. Messvorrichtung nach einem der vorausgehenden Ansprüche, bei der die Halteeinrichtung (24, 124) eine gebogene Führungsschiene (126) aufweist.

6. Messvorrichtung nach einem der vorausgehenden Ansprüche,
bei der die Kombination aus der Kippbewegung und der Translationsbewegung durch eine Rotationsbewegung bezüglich einer Rotationsachse (146) erfolgt, wobei die Rotationsachse von einem geometrischen Schwerpunkt (56) des Umlenkelements (22) um mindestens 2 mm beabstandet ist.

7. Messvorrichtung nach Anspruch 6,
bei der die Rotationsachse (146) derart angeordnet ist, dass der Schnittpunkt der Rotationsachse mit einer Strahlebene, welche vom Richtungsvektor der auf das Umlenkelement (22) eingestrahlten Messstrahlung und dem Richtungsvektor der vom Umlenkelement (22) abgestrahlten Messstrahlung aufgespannt ist, in der Strahlebene auf der gleichen Seite bezüglich einer durch den Richtungsvektor der eingestrahlten Messstrahlung definierten Einstrahlachse wie das diffraktive optische Element (26-1) angeordnet ist.

8. Messvorrichtung nach Anspruch 7,
bei der die Rotationsachse (146) derart angeordnet ist, dass der Schnittpunkt der Rotationsachse mit der Strahlebene in einem Bereich angeordnet ist, welcher in Bezug das diffraktive optische Element (26-1) auf der der Einstrahlachse entgegengesetzten Seite liegt, wobei der Bereich in Richtung der Einstrahlachse eine Ausdehnung von maximal dem Zweifachen eines Abstands des diffraktiven optischen Element (26-1) von der Einstrahlachse und in Richtung senkrecht zur Einstrahlachse eine Ausdehnung von maximal dem Dreifachen des Abstands aufweist.

9. Messvorrichtung nach Anspruch 8,
bei welcher der Bereich sowohl in Richtung der Einstrahlachse als auch quer zur Einstrahlachse jeweils eine Ausdehnung von maximal dem Einfachen des Abstands aufweist.

10. Messvorrichtung nach einem der vorausgehenden Ansprüche,
bei dem die Halteeinrichtung (24, 124) mindestens einen Aktuator (150) zur Ausführung der zumindest einen Rotationsbewegung umfasst.

11. Messvorrichtung nach einem der vorausgehenden Ansprüche,
bei dem das Umlenkelement (22) einen Umlenkspiegel (23) umfasst.

12. Messvorrichtung nach einem der Ansprüche 1 bis 10,
bei dem das Umlenkelement (22) ein Prisma (22-1, 22-2) umfasst.

13. Messvorrichtung nach einem der vorausgehenden Ansprüche,
welche eine Interferometerkavität (35) aufweist und das Umlenkelement (22) außerhalb der Interferometerkavität (35) angeordnet ist.

14. Messvorrichtung nach einem der Ansprüche 1 bis 12,
welche eine Interferometerkavität (235) aufweist und das Umlenkelement (22) innerhalb der Interferometerkavität (235) angeordnet ist.

15. Verfahren zur interferometrischen Formvermessung einer jeweiligen Oberfläche (12) von Testobjekten (14-1) mit den Schritten:
- Einstrahlen einer Messstrahlung (18) mittels eines Umlenkelements (22) auf ein erstes diffraktives optisches (26-1) zum Erzeugen einer ersten Prüfwelle und interferometrisches Vermessen der Oberflächenform eines ersten der Testobjekte mittels der ersten Prüfwelle,
- Verändern der Stellung des Umlenkelements (22) durch eine Kombination aus einer Kippbewegung und einer Translationsbewegung, sowie
- Einstrahlen der Messstrahlung mittels des bezüglich der Stellung veränderten Umlenkelements auf ein zweites diffraktives optisches Element (26-2) zum Erzeugen einer zweiten Prüfwelle und interferometrisches Vermessen der Oberflächenform eines zweiten der Testobjekte mittels der zweiten Prüfwelle.

16. Verfahren nach Anspruch 15,
bei dem das zweite diffraktive optische Element (26-2) vor der Einstrahlung der Messstrahlung mittels des bezüglich der Stellung veränderten Umlenkelements anstelle des ersten optischen Elements (26-1) in einem Prüfwellenerzeugungsabschnitt einer interferometrischen Messvorrichtung angeordnet wird.

17. Verfahren nach Anspruch 15 oder 16,
bei dem das zweite diffraktive optische Element (26-2) in einer Drehstellung angeordnet wird, welche von der Drehstellung des ersten diffraktiven optischen Elements (26-1) abweicht.

## Claims

1. A measuring device (10) for interferometrically measuring the shape of a surface (12) of a test object (14-1), having:
- a diffractive optical element (26-1) configured to create, from a radiated-in measurement radiation (18), a test wave (28) configured to be radiated onto the surface of the test object and to this end adapt a wavefront of the test wave to a target shape of the surface of the test object,- a reference element (32) for reflecting a reference wave (30),
- a deflection element (22) disposed upstream of the diffractive optical element (26-1) in the beam path of the measurement radiation, and
- a holding apparatus (24, 124) serving to hold the deflection element and being configured to alter a position of the deflection element by way of a combination of a tilt movement (48) and a translation movement (52).

2. The measuring device according to Claim 1,
wherein the holding apparatus (24) is configured to displace the position of the deflection element (22) by at least 2 mm by way of the translation movement.

3. The measuring device according to Claim 1 or 2,
wherein the holding apparatus (24, 124) is configured to alter a tilt position of the deflection element (22) by at least 2 mrad by way of the tilt movement.

4. The measuring device according to any of the preceding claims,
wherein the holding apparatus (24, 124) comprises a tilt actuator (50) for carrying out the tilt movement and a separate displacement actuator (54) for carrying out the translation movement.

5. The measuring device according to any of the preceding claims,
wherein the holding apparatus (24, 124) has a curved guide rail (126).

6. The measuring device according to any of the preceding claims,
wherein the combination of tilt movement and translation movement is implemented by way of a rotational movement with respect to an axis of rotation (146), the axis of rotation being spaced apart from a geometric centroid (56) of the deflection element (22) by at least 2 mm.

7. The measuring device according to Claim 6,
wherein the axis of rotation (146) is arranged in such a way that the point of intersection of the axis of rotation and a beam plane spanned by the direction vector of the measurement radiation radiated onto the deflection element (22) and the direction vector of the measurement radiation radiated from the deflection element (22) is arranged on the same side of the beam plane as the diffractive optical element (26-1), the same side being in relation to an incoming radiation axis defined by the direction vector of the radiated-in measurement radiation.

8. The measuring device according to Claim 7,
wherein the axis of rotation (146) is arranged in such a way that the point of intersection of the axis of rotation and the beam plane is arranged in an area which, in relation to the diffractive optical element (26-1), is located on the opposite side of the incoming radiation axis, the area having an extent of no more than two times a distance of the diffractive optical element (26-1) from the incoming radiation axis in the direction of the incoming radiation axis and an extent of no more than three times the distance in the direction perpendicular to the incoming radiation axis.

9. The measuring device according to Claim 8,
wherein the area in each case has an extent of no more than one-times the distance, both in the direction of the incoming radiation axis and transversely to the incoming radiation axis.

10. The measuring device according to any of the preceding claims,
wherein the holding apparatus (24, 124) comprises at least one actuator (150) for carrying out the at least one rotational movement.

11. The measuring device according to any of the preceding claims,
wherein the deflection element (22) comprises a deflection mirror (23).

12. The measuring device according to any of Claims 1 to 10,
wherein the deflection element (22) comprises a prism (22-1, 22-2).

13. The measuring device according to any of the preceding claims,
comprising an interferometer cavity (35) and with the deflection element (22) being arranged outside of the interferometer cavity (35).

14. The measuring device according to any of Claims 1 to 12,
comprising an interferometer cavity (235) and with the deflection element (22) being arranged within the interferometer cavity (235).

15. A method for interferometrically measuring the shape of a respective surface (12) of test objects (14-1), including the following steps:
- radiating a measurement radiation (18) onto a first diffractive optical element (26-1) by means of a deflection element (22), for the purpose of creating a first test wave and interferometrically measuring the surface shape of a first of the test objects using the first test wave,
- altering the position of the deflection element (22) using a combination of a tilt movement and a translation movement, and
- radiating the measurement radiation onto a second diffractive optical element (26-2) by means of the deflection element whose position has been altered, for the purpose of creating a second test wave and interferometrically measuring the surface shape of a second of the test objects using the second test wave.

16. The method according to Claim 15,
wherein radiating the measurement radiation by means of the deflection element whose position has been altered is preceded by the second diffractive optical element (26-2) being arranged in place of the first optical element (26-1) in a test wave creation portion of an interferometric measuring device.

17. The method according to Claim 15 or 16,
wherein the second diffractive optical element (26-2) is arranged in a rotational position which deviates from the rotational position of the first diffractive optical element (26-1).

## Revendications

1. Arrangement de mesure (10) destiné à la mesure interférométrique de la forme d'une surface (12) d'un objet de test (14-1) comprenant :
- un élément optique diffractif (26-1), lequel est configuré pour générer, à partir d'un rayonnement de mesure (18) irradié, une onde de contrôle (28) configurée pour être irradiée sur la surface de l'objet à tester et pour adapter à cet effet un front d'onde de l'onde de contrôle à une forme voulue de la surface de l'objet à tester,
- un élément de référence (32) destiné à réfléchir une onde de référence (30),
- un élément de déviation (22) placé en amont de l'élément optique diffractif (26-1) dans le trajet de rayon du rayonnement de mesure, ainsi que
- un dispositif de maintien (24, 124) destiné à maintenir l'élément de déviation, lequel est configuré pour modifier une position de l'élément de déviation par une combinaison d'un mouvement de basculement (48) et d'un mouvement de translation (52).

2. Arrangement de mesure selon la revendication 1,
le dispositif de maintien (24) étant configuré pour déplacer une position de l'élément de déviation (22) d'au moins 2 mm au moyen du mouvement de translation.

3. Arrangement de mesure selon la revendication 1 ou 2,
avec lequel le dispositif de maintien (24, 124) est configuré pour modifier une position de basculement de l'élément de déviation (22) d'au moins 2 mrad au moyen du mouvement de basculement.

4. Arrangement de mesure selon l'une des revendications précédentes,
avec lequel le dispositif de maintien (24, 124) comprend un actionneur de basculement (50) destiné à exécuter le mouvement de basculement et un actionneur de déplacement (54) séparé destiné à effectuer le mouvement de translation.

5. Arrangement de mesure selon l'une des revendications précédentes,
avec lequel le dispositif de maintien (24, 124) comprend un rail de guidage (126) coudé.

6. Arrangement de mesure selon l'une des revendications précédentes,
avec lequel la combinaison du mouvement de basculement et du mouvement de translation est effectuée par un mouvement de rotation par rapport à un axe de rotation (146), l'axe de rotation étant espacé d'au moins 2 mm d'un centre de gravité géométrique (56) de l'élément de déviation (22).

7. Arrangement de mesure selon la revendication 6,
avec lequel l'axe de rotation (146) est disposé de telle sorte que le point d'intersection de l'axe de rotation avec un plan de rayon, lequel est délimité par le vecteur de direction du rayonnement de mesure irradié sur l'élément de déviation (22) et le vecteur de direction du rayonnement de mesure rayonné par l'élément de déviation (22), est disposé dans le plan de rayon sur le même côté par rapport à un axe d'irradiation défini par le vecteur de direction du rayonnement de mesure irradié que l'élément optique diffractif (26-1).

8. Arrangement de mesure selon la revendication 7,
avec lequel l'axe de rotation (146) est disposé de telle sorte que le point d'intersection de l'axe de rotation avec le plan de rayon est disposé dans une zone qui, par rapport à l'élément optique diffractif (26-1), se trouve du côté opposé à l'axe d'irradiation, la zone présentant, dans la direction de l'axe d'irradiation, une extension égale au maximum au double d'une distance de l'élément optique diffractif (26-1) par rapport à l'axe d'irradiation et, dans la direction perpendiculaire à l'axe d'irradiation, une extension égale au maximum au triple de la distance.

9. Arrangement de mesure selon la revendication 8,
avec lequel la zone présente, à la fois dans la direction de l'axe d'irradiation que transversalement à l'axe d'irradiation, une extension maximale égale à une fois la distance.

10. Arrangement de mesure selon l'une des revendications précédentes,
avec lequel le dispositif de maintien (24, 124) comporte au moins un actionneur (150) destiné à exécuter l'au moins un mouvement de rotation.

11. Arrangement de mesure selon l'une des revendications précédentes,
avec lequel l'élément de déviation (22) comprend un miroir de déviation (23).

12. Arrangement de mesure selon l'une des revendications 1 à 10,
avec lequel l'élément de déviation (22) comprend un prisme (22-1, 22-2).

13. Arrangement de mesure selon l'une des revendications précédentes,
lequel possède une cavité d'interféromètre (35) et l'élément de déviation (22) est disposé à l'extérieur de la cavité d'interféromètre (35).

14. Arrangement de mesure selon l'une des revendications 1 à 12,
lequel possède une cavité d'interféromètre (235) et l'élément de déviation (22) est disposé à l'intérieur de la cavité d'interféromètre (235).

15. Procédé de mesure interférométrique de la forme d'une surface (12) respective d'objets de test (14-1), comprenant les étapes suivantes :
- irradiation d'un rayonnement de mesure (18) au moyen d'un élément de déviation (22) sur une première optique diffractive (26-1) afin de générer une première onde de contrôle et mesure interférométrique de la forme de surface d'un premier des objets de test au moyen de la première onde de contrôle,
- modification de la position de l'élément de déviation (22) par une combinaison d'un mouvement de basculement et d'un mouvement de translation, ainsi que
- irradiation du rayonnement de mesure au moyen de l'élément de déviation modifié par rapport à la position sur un deuxième élément optique diffractif (26-2) afin de générer une deuxième onde de contrôle et mesure interférométrique de la forme de surface d'un deuxième des objets de test au moyen de la deuxième onde de contrôle.

16. Procédé selon la revendication 15,
avec lequel le deuxième élément optique diffractif (26-2) est disposé à la place du premier élément optique (26-1) dans une portion de génération d'onde de contrôle d'un arrangement de mesure interférométrique avant l'irradiation du rayonnement de mesure au moyen de l'élément de déviation dont la position est modifiée.

17. Procédé selon la revendication 15 ou 16,
avec lequel le deuxième élément optique diffractif (26-2) est disposé dans une position de rotation qui diffère de la position de rotation du premier élément optique diffractif (26-1).
